# EUROPÄISCHE PATENTANMELDUNG

(11) **EP 4 678 342 A1**
(43) Veröffentlichungstag der Anmeldung: **14.01.2026**
(21) Anmeldenummer: 24187989.9
(22) Anmeldetag: 11.07.2024
(51) Int. Cl.: B25J 9/00

(54) **EXOSKELETT MIT TASCHE**

(71) Anmelder: Hilti Aktiengesellschaft, 9494 Schaan (LI)
(72) Erfinder: Wörz, Sonya, 86929 Penzing (DE)
(74) Vertreter: Hilti Aktiengesellschaft Corporate Intellectual Property

(57) **Zusammenfassung**

Die vorliegende Erfindung betrifft ein Exoskelett (100) zur körperlichen Unterstützung eines Anwenders, wobei das Exoskelett wenigstens einen Beingurt (102, 104), zur Befestigung des Exoskeletts (100) an einem Bein des Anwenders, sowie mindestens eine Tasche (130), welche vorzugsweise lösbar am Exoskelett (100) befestigt und dazu ausgelegt ist einen oder mehrere Gegenstände des Anwenders aufzunehmen.

## Beschreibung

Die vorliegende Erfindung betrifft ein Exoskelett, insbesondere aber nicht ausschließlich ein passives Exoskelett, zur körperlichen Unterstützung eines Anwenders. Das Exoskelett eignet sich insbesondere zur Unterstützung von Arbeitern in der Baubranche.

Exoskelette verbessern den Komfort der Mitarbeiter insbesondere auf der Baustelle und können den durch körperlich anstrengende Arbeit verursachten Krankenstand verringern. Sie sind ideal für kontinuierliche oder sich wiederholende Arbeiten mit und ohne Werkzeug.

Auf dem Markt erhältlich sind Exoskelette, die zur passiven und/oder aktiven Unterstützung der eines Anwenders, insbesondere der Arme, der Beine oder des Rückens dienen. Aktive Exoskelette verfügen über integrierte, motorisierte Aktuatoren, die den Benutzer mit einer erforderlichen Kraft oder einem notwendigen Drehmoment unterstützen. Daher werden sie auch als motorisierte Exoskelette bezeichnet. Typischerweise kommen Elektromotoren als Antriebe zum Einsatz, es ist aber auch bekannt pneumatische oder hydraulische Systeme zum Einsatz zu bringen. Im Gegensatz dazu enthalten passive Exoskelette keine derartigen "aktiven" Aktuatoren. Sie nutzen stattdessen Federn und ihr Gestell, um den Benutzer mit Hilfe von Rückstellkräften zu unterstützen.

Passive Exoskelette verzichten auf aktive Komponenten wie Motoren und elektrische Energieversorgung. Daher sind sie in der Regel kleiner, leichter und weniger hinderlich. Sie sind einfacher zu bedienen, wartungsärmer, benötigen keine Batterieladung und sind kostengünstiger. Insbesondere passive Exoskelette bestehen aus einem textilen Gestell, das Komfort und Bewegungsfreiheit bietet. Sie sind auch deshalb eine Verbindung fortschrittlichster Exoskelett-Technologie und Arbeitskleidung.

Bisher werden Exoskelette als letzte Schicht über der normalen Arbeitskleidung getragen. Dabei werden durch die Befestigung am Körper, wie beispielsweise durch Beingurte, teile der Arbeitskleidung überdeckt und hierdurch nicht mehr oder nur unter großem Aufwand zugänglich.

Es ist die Aufgabe der vorliegenden Erfindung, ein verbessertes Exoskelett zur körperlichen Unterstützung eines Anwenders bereitzustellen, welches die oben genannten Nachteile ausräumt und insbesondere Stauraum für Werkzeuge und andere Gegenstände bietet.

Die oben genannte Aufgabe wird durch den Gegenstand des unabhängigen Patentanspruchs 1 gelöst. Vorteilhafte Weiterbildungen des erfindungsgemäßen Exoskeletts sind in den abhängigen Patentansprüchen angegeben.

Dementsprechend betrifft die vorliegende Erfindung ein Exoskelett zur körperlichen Unterstützung eines Anwenders, wobei das Exoskelett wenigstens einen Beingurt, zur Befestigung des Exoskeletts an einem Bein des Anwenders, sowie mindestens eine Tasche, welche vorzugsweise lösbar am Exoskelett befestigt und dazu ausgelegt ist, einen oder mehrere Gegenstände des Anwenders aufzunehmen. Die Vorteile der Erfindung liegen auf der Hand. So kann durch die mindestens eine Tasche Stauraum für Werkzeuge beziehungsweise andere Gegenstände bereitgestellt werden. Die Tasche ist trotz der Riemen und Gurte des Exoskeletts frei zugänglich, da diese direkt am Exoskelett befestigt wird. Die Tasche kompensiert damit die durch Teile des Exoskeletts bedeckten Taschen der Arbeitskleidung. Die erfindungsgemäße Tasche des Exoskeletts kann unterschiedliche Größen und Formen aufweisen. Beispielsweise kann die Tasche dazu ausgelegt sein, Handwerkzeuge wie Schraubendreher oder Seitenschneider aufzunehmen. Andererseits kann die Tasche auch für andere Gegenstände, wie Mobiltelefone oder Tablets ausgelegt sein.

Nach einer weiteren Ausführungsform weist das Exoskelett Schultergurte zum Tragen des Exoskeletts auf den Schultern des Anwenders auf, wobei die mindestens eine Tasche an wenigstens einem der Schultergurte befestigt ist. Die Befestigung der Tasche am Schultergurt ermöglicht ein rasches und einfaches Erreichen der Tasche auch während der Arbeit. Wie dies später näher erläutert werden wird, kann sich die Tasche demnach auf Hüfthöhe befinden, welche besonders einfach und schnell erreichbar ist. Insbesondere Bauarbeiter, für welche sich das erfindungsgemäße Exoskelett besonders eignet, profitieren von einer derartigen Anbringung der Tasche, da die Lage der Tasche so dann im Wesentlichen mit der Lage von herkömmlichen Hosentaschen übereinstimmt. Darüber hinaus verteilt sich das Gewicht der in der Tasche angeordneten Gegenstände demnach auf die Schultern und die Hüfte des Anwenders, weshalb die Tasche besonders einfach zu tragen ist. In einer alternativen Ausführungsvariante weist das Exoskelett einen Rückenteil auf, welche insbesondere am unteren Rücken des Benutzers anliegt und zwischen den Schultergurten und den Beingurten angeordnet ist. Die Tasche kann in einer Ausführungsvariante auch am Rückenteil befestigt sein.

Nach einer weiteren Ausführungsform ist die mindestens eine Tasche derart beweglich am Exoskelett angebracht, dass diese, in jeder Lage des Exoskeletts, hängt. Mit anderen Worten, die Tasche hängt frei am Exoskelett. Dementsprechend behält die Tasche zu jeder Zeit ihre hängende Auslage. Beispielsweise hängt die Tasche auch dann nach unten, wenn sich der Anwender beugt. Die in der Tasche gelagerten Gegenstände sind demnach auch dann sicher in der Tasche gelagert, wenn sich der Anwender während der Arbeit bewegt. Ein Herausfallen der Werkzeuge beziehungsweise anderen Gegenstände wird somit wirkungsvoll verhindert.

Nach einer weiteren Ausführungsform ist die mindestens eine Tasche an einem Bereich des Exoskeletts angebracht, welcher bei Benutzung am Rücken des Anwenders getragen wird. Durch die Anbringung der Tasche am Rücken behindert diese die Arbeiten des Anwenders nicht. Die in der Tasche gelagerten Gegenstände sind insbesondere auch vor Schmutz und anderen Fremdkörper geschützt, da sich der Nutzer typischerweise zwischen der Tasche und dem Werkstück bzw. der zu bearbeitenden Oberfläche befindet.

Nach einer weiteren Ausführungsform ist die mindestens eine Tasche aus einem wasserfesten Material gefertigt. Somit ist das erfindungsgemäße Exoskelett auch für Arbeiten im Außenbereich geeignet. Durch die wasserfeste Tasche wird sichergestellt, dass die in der Tasche gelagerten Gegenstände auch bei Regen sicher geschützt sind. Dies ist insbesondere dann wichtig, wenn die Tasche zum Lagern elektronischer Gegenstände, wie beispielsweise Smartphones oder Tablets, verwendet wird.

Nach einer weiteren Ausführungsform ist die mindestens eine Tasche aus einem Stoffmaterial gefertigt. Das Stoffmaterial verbessert den Tragekomfort der Tasche. Insbesondere schmiegt sich das Stoffmaterial an den Körper des Benutzers, so dass dieser die Tasche während seiner Arbeit kaum bis gar nicht wahrnimmt. Eine aus Stoffmaterial gefertigte Tasche hat außerdem Gewichtsvorteile, um das Gesamtgewicht des Exoskeletts niedrig zu halten. Dies ist vor allem bei passiven Exoskeletten von großer Bedeutung.

Nach einer weiteren Ausführungsform ist die mindestens eine Tasche, insbesondere durch einen Reißverschluss, verschließbar. Dies hat den Vorteil, dass die in der Tasche gelagerten Gegenstände noch besser vor Umwelteinflüssen wie Staub oder Regen geschützt sind. Auch ein ungewolltes Herausfallen der Gegenstände kann hiermit wirkungsvoll verhindert werden.

Nach einer weiteren Ausführungsform ist das Exoskelett dazu ausgebildet, ein Aufrichten des Anwenders passiv zu unterstützen. Wie oben bereits erwähnt, unterscheidet sich das passive Exoskelett vom aktiven Exoskelett insbesondere darin, dass keine aktiven Aktuatoren beziehungsweise Motoren verwendet werden. Vielmehr wird eine Bewegung des Nutzers in potentieller Energie einer elastischen Vorrichtung gespeichert, um diese bei einer Gegenbewegung des Nutzers wieder freizugeben. Die hierdurch freigegebene, potentielle Energie der elastischen Vorrichtung (beispielsweise Expander) unterstützt den Nutzer bei der Gegenbewegung und entlastet dessen Muskeln.

Nach einer weiteren Ausführungsform weist das Exoskelett wenigstens einen elastischen Expander auf, welcher zwischen wenigstens einem Schultergurt des Exoskeletts und dem wenigstens einen Beingurt angeordnet und dazu ausgebildet ist, eine Rückstellkraft zu erzeugen, wenn der Anwender, insbesondere durch eine Beugung nach vorne, einen Abstand zwischen dem Schultergurt und dem Beingurt vergrössert. Bei dem Expander handelt es sich also um die oben bereits erwähnte elastische Vorrichtung, welche dazu dient, die Beugung des Nutzers in eine potentielle Energie, das heißt eine Streckung des Expanders, umzuwandeln. Die Rückstellkraft des Expanders unterstützt sodann die Gegenbewegung des Nutzers, beispielsweise das Aufrichten.

Nach einer weiteren Ausführungsform ist die mindestens eine Tasche dazu ausgelegt, ein oder mehrere Werkzeuge aufzunehmen.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

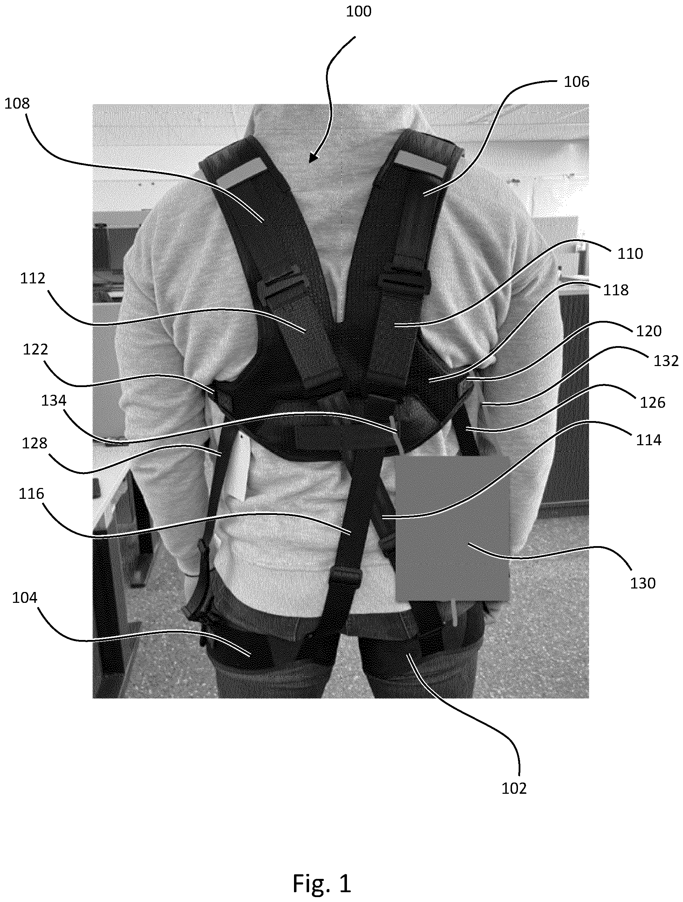

- Fig. 1: eine schematische Rückansicht eines Exoskeletts gemäß einer Ausführungsform der vorliegenden Erfindung.

### Detaillierte Beschreibung

Figur 1 zeigt eine schematische Rückansicht eines Exoskeletts 100 gemäß der vorliegenden Erfindung. Bei dem Exoskelett 100 gemäß Figur 1 handelt es sich um ein passives Exoskelett. Demnach wandelt das Exoskelett Bewegungen des Nutzers in potentielle Energie einer oder mehrerer elastischer Vorrichtungen, um diese bei der Gegenbewegung wieder abzugeben und somit den Nutzer zu unterstützen.

Das Exoskelett 100 weist einen ersten Beingurt, 102 und einen zweiten Beingurt 104 auf. Der erste Beingurt 102 wird zur Befestigung des Exoskeletts 100 an einem ersten Bein des Benutzers angebracht. Der zweite Beingurt 104 wird zur Befestigung des Exoskeletts 100 an einem zweiten Bein des Benutzers angebracht. In der hier dargestellten Rückansicht ist der erste Beingurt 102 am rechten Bein des Benutzers angebracht, während der zweite Beingurt 104 am linken Bein angebracht ist. Der erste Beingurt 102 und der zweite Beingurt 104 können über entsprechende Riemen verstellt werden, um die Beingurte 102, 104 an den Umfang des jeweiligen Oberschenkels des Benutzers anzupassen.

Das Exoskelett 100 weist einen ersten Schultergurt 106 und einen zweiten Schultergurt 108 auf. Die beiden Schultergurte 106,108 erstrecken sich jeweils von einem oberen Endbereich eines Expanders 110, 112 zu einem Seitenbereich eines Rückenteils 118. Insbesondere erstreckt sich ein erster Schultergurt 106 zwischen einem ersten Expander 110 und einem ersten Seitenbereich 120 des Rückenteils 118. Ein zweiter Schultergurt 108 erstreckt sich zwischen einem zweiten Expander 112 und einem gegenüberliegenden, zweiten Seitenbereich 122 des Rückenteils 118. Die Schultergurte 106, 108 dienen dazu das Exoskelett 100 am Körper des Nutzers zu befestigen. Die Schultergurte 106, 108 sind vorzugsweise mit hier nicht dargestellten Riemen versehen, um diese auf den Körper des Nutzers einstellen zu können.

Zwischen dem ersten Schultergurt 106 und dem zweiten Beingurt 104 ist ein erster Expander 110 vorgesehen. Zwischen dem zweiten Schultergurt 108 und dem ersten Beingurt 102 ist ein zweiter Expander 112 vorgesehen. Bei den Expandern 110, 112 handelt es sich um elastische Vorrichtungen, welche dazu dienen die Bewegungen des Nutzers in potentielle Energie (Rückstellkräfte) der Expander umzuwandeln und diese bei einer Gegenbewegung wieder freizugeben. In der hier dargestellten Ausführungsform werden die ersten und zweiten Expander 110, 112 insbesondere dann gestreckt, wenn der Benutzer sich nach vorne beugt. Es sei an dieser Stelle angemerkt, dass statt der Expander jede andere elastische Vorrichtung verwendet werden kann, welche bei Streckung (oder auch Stauchung) eine Rückstellkraft verursacht.

Zwischen dem unteren Ende der Expander, 110, 112 und den Beingurten 102, 104 sind verstellbare Riemen 114, 116 angebracht. Ein erster verstellbarer Riemen 114 ist zwischen dem ersten Beingurt 102 und dem zweiten Expander 112 angeordnet. Ein zweiter verstellbarer Riemen 116 ist zwischen dem zweiten Beingurt 104 und dem ersten Expander 110 angeordnet. Die verstellbaren Riemen 114, 116 sind dazu ausgelegt das Exoskelett 100 auf die Größe des Nutzers anzupassen. Insbesondere sollten die Riemen 114, 116 derart eingestellt werden, dass diese, bei aufrechter Haltung des Nutzers, straff zwischen den Beingurten 102, 104 und den unteren Enden der Expander 110, 112 verlaufen.

Zwischen dem Rückenteil 118 und den Beingurten 102, 104 sind Beingurt-Verbinder, 128, 126 vorgesehen. Ein erster Beingurt-Verbinder 126 ist zwischen dem Rückenteil 118 und dem ersten Beingurt 102 vorgesehen. Ein zweiter Beingurt-Verbinder 128 ist zwischen dem Rückenteil 118 und dem zweiten Beingurt 104 vorgesehen. Die Beingurt-Verbinder 126, 128 dienen unter anderem dazu, den Rückenteil 118 korrekt am unteren Rücken des Nutzers zu positionieren.

Das erfindungsgemäße Exoskelett gemäß Figur 1 weist eine Tasche 130 auf. In der hier dargestellten Ausführungsform ist die Tasche 130 am Rückenteil 118 befestigt. Die Tasche 130 weist Stricke oder Riemen 132,134 auf, welche beispielsweise am Rückenteil 118 angenäht sind. Durch die Anbringung am Rückenteil 118 wird die Tasche 130 am Rücken des Nutzers angeordnet. Selbstverständlich kann die Tasche 130 alternativ auch an anderen Teilen des Exoskeletts 10 angebracht werden. Beispielsweise könnte die Tasche 130 alternativ an den Schultergurten 106, 108 oder den Beingurten in 102,104 angebracht werden.

Durch die Stricke beziehungsweise Riemen 132,134 wird gewährleistet, dass die Tasche 130 am jeweiligen Teil des Exoskeletts 100 (hier am Rückenteil 118) hängend angebracht ist. Durch die hier gezeigte Aufhängung der Tasche am Exoskelett 100 folgt die Tasche immerzu der Schwerkraft. Hierdurch wird verhindert, dass Gegenstände aus der Tasche herausfallen, beispielsweise wenn der Nutzer sich beugt.

### Bezugszeichenliste

- 100: Exoskelett
- 102, 104: Beingurt
- 106, 108: Schultergurt
- 110, 112: Expander
- 114, 116: verstellbare Riemen
- 118: Rückenteil
- 120, 122: Seitenbereich
- 126, 128: Beingurt-Verbinder
- 130: Tasche
- 132, 134: Strick

## Patentansprüche

1. Exoskelett zur körperlichen Unterstützung eines Anwenders, wobei das Exoskelett wenigstens einen Beingurt, zur Befestigung des Exoskeletts an einem Bein des Anwenders, sowie mindestens eine Tasche, welche vorzugsweise lösbar am Exoskelett befestigt und dazu ausgelegt ist einen oder mehrere Gegenstände des Anwenders aufzunehmen.

2. Exoskelett nach Anspruch 1,
wobei das Exoskelett Schultergurte zum Tragen des Exoskeletts auf den Schultern des Anwenders, aufweist, und wobei die mindestens eine Tasche an wenigstens einem der Schultergurte befestigt ist.

3. Exoskelett nach Anspruch 1 oder 2,
wobei die mindestens eine Tasche derart beweglich am Exoskelett angebracht ist, dass diese, in jeder Lage des Exoskeletts, hängt.

4. Exoskelett nach einem der Ansprüche 1 bis 3,
wobei die mindestens eine Tasche an einem Bereich des Exoskeletts angebracht ist, welcher bei Benutzung am Rücken des Anwenders getragen wird.

5. Exoskelett nach einem der Ansprüche 1 bis 4,
wobei die mindestens eine Tasche aus einem wasserfesten Material gefertigt ist.

6. Exoskelett nach einem der Ansprüche 1 bis 5,
wobei die mindestens eine Tasche aus einem Stoffmaterial gefertigt ist.

7. Exoskelett nach einem der Ansprüche 1 bis 6,
wobei die mindestens eine Tasche, insbesondere durch einen Reißverschluss, verschließbar ist.

8. Exoskelett nach einem der Ansprüche 1 bis 7,
wobei das Exoskelett dazu ausgebildet ist, ein Aufrichten des Anwenders passiv zu unterstützen.

9. Exoskelett nach Anspruch 8,
wobei das Exoskelett wenigstens einen elastischen Expander aufweist, welcher zwischen wenigstens einem Schultergurt des Exoskeletts und dem wenigstens einen Beingurt angeordnet und dazu ausgebildet ist, eine Rückstellkraft zu erzeugen, wenn der Anwender, insbesondere durch eine Beugung nach vorne, einen Abstand zwischen dem Schultergurt und dem Beingurt vergrössert.

10. Exoskelett nach einem der Ansprüche 1 bis 9,
wobei die mindestens eine Tasche dazu ausgelegt ist, ein oder mehrere Werkzeuge aufzunehmen.
